(19) Europäisches Patentamt
European Patent Office
Office européen des brevets

(11) **EP 4 405 165 B1**

(12) **EUROPÄISCHE PATENTSCHRIFT**

(45) Veröffentlichungstag und Bekanntmachung des Hinweises auf die Patenterteilung:
**10.12.2025 Patentblatt 2025/50**

(21) Anmeldenummer: **22792782.9**

(22) Anmeldetag: **16.09.2022**

(51) Internationale Patentklassifikation (IPC):
**B29C 71/00** *(2006.01)* **B29C 71/04** *(2006.01)*
**B29C 64/35** *(2017.01)* **B33Y 40/20** *(2020.01)*
**B29C 35/08** *(2006.01)*

(52) Gemeinsame Patentklassifikation (CPC):
**B29C 71/0009; B29C 64/35; B29C 71/04; B33Y 40/20;** B29C 2035/0827; B29C 2035/0833; B29C 2071/0018; B29C 2071/0027

(86) Internationale Anmeldenummer:
**PCT/EP2022/075746**

(87) Internationale Veröffentlichungsnummer:
**WO 2023/046584 (30.03.2023 Gazette 2023/13)**

(54) **VERFAHREN ZUR NACHBEHANDLUNG VON GEDRUCKTEN 3-D-OBJEKTEN**

METHOD FOR THE POST-TREATMENT OF PRINTED 3D OBJECTS

PROCÉDÉ DE POST-TRAITEMENT D'OBJETS IMPRIMÉS EN 3D

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.09.2021 DE 102021124655**

(43) Veröffentlichungstag der Anmeldung:
**31.07.2024 Patentblatt 2024/31**

(73) Patentinhaber: **Mühlbauer Technology GmbH**
**22547 Hamburg (DE)**

(72) Erfinder:
• **MEYER, Sven**
**21641 Apensen (DE)**
• **NEFFGEN, Stephan**
**25421 Pinneberg (DE)**
• **SALMEN, Sunhild C.**
**22587 Hamburg (DE)**
• **TRÄGER, Jens**
**25491 Hetlingen (DE)**

(74) Vertreter: **Glawe, Delfs, Moll**
**Partnerschaft mbB**
**Hopfenmarkt 33**
**20457 Hamburg (DE)**

(56) Entgegenhaltungen:
**US-A1- 2017 028 432 US-A1- 2018 319 110**

## Beschreibung

Die Erfindung betrifft ein Verfahren zur Nachbehandlung von aus einer lichthärtenden Harzformulierung gedruckten 3-D-Objekten.

Im Stand der Technik sind 3D-Drucker diverser Bauarten und für unterschiedliche Druckverfahren bekannt. Ein bekanntes Druckverfahren ist dabei das stereolithografische Verfahren, bei dem eine geeignete flüssige Harz- bzw. Monomerformulierung durch gezieltes Belichten punktweise ausgehärtet wird, um schichtweise ein gewünschtes dreidimensionales Objekt zu erzeugen.

In der klassischen Stereolithografie wird dazu ein fokussierter Laserstrahl über einen um zwei zueinander senkrecht stehende Achsen schwenkbaren Spiegel abgelenkt, um das Harz in den in einer Schicht auszuhärtenden Punkten nacheinander abzufahren und so zu belichten. Insbesondere, wenn größere Flächen ausgehärtet werden sollen, ist dieses Verfahren zeitaufwendig, da auszuhärtenden Flächen punktweise abgefahren, die Flächen durch den Laser also praktisch schraffiert werden müssen. Auch kann es bei größeren Objekten zu Verzerrungen im Randbereich kommen, falls der Laser nur in einem flachen Winkel auf das auszuhärtende Harz auftrifft.

Als Alternative dazu wurde das sogenannte "Digital Light Processing" (DLP)-Druckverfahren entwickelt. Bei diesem Verfahren wird das Licht einer Lichtquelle über eine digitale Mikrospiegel-Einheit auf das auszuhärtende Harz gelenkt. Die Mikrospiegel-Einheit umfasst dabei eine rechteckige Anordnung von kippbaren Mikrospiegeln, die einzelnen ansteuerbar sind. Typische Mikrospiegel-Einheiten umfassen $1920 \times 1080$ einzelnen steuerbare Spiegel, die zwischen einer Position, in der das darauf auftreffende Licht auf einen jeweils vorgegebenen Punkt im Harz hin umgelenkt wird, und einer zweiten Position, in der dies nicht geschieht, verschwenkt werden können. Die Anzahl der individuell aushärtbaren Punkte in einer Schicht des Harzes ist durch die Anzahl der Spiegel der Mikrospiegel-Einheit vorgegeben. Die letztendliche Größe der einzelnen Punkte im Harz kann durch den Abstand zwischen Mikrospiegel-Einheit und der zu belichtenden Schicht beeinflusst werden.

Im Stand der Technik sind weiterhin Ausführungsformen bekannt, bei denen anstelle einer durch eine Lichtquelle beleuchteten Mikrospiegel-Einheit ein von einer flächigen Lichtquelle von hinten beleuchtetes LCD-Display verwendet wird, um Harz an gewünschten Punkten auszuhärten. Dabei muss das LCD-Display, welches selektiv an einzelnen Punkten das Licht der dahinterliegenden Beleuchtung durchlassen kann, unmittelbar an der Schicht mit den auszuhärtenden Punkten im ansonsten flüssigen Harz angeordnet sein.

Aufgrund des Auflösungsvermögens von 3D-Druckern, aber auch aufgrund von bei derzeitigen 3D-Druckverfahren nicht vollständig vermeidbarer Riss- oder Porenbildung an der Oberfläche gedruckter 3D-Objekte kann es abhängig vom vorgesehenen Verwendungszweck erforderlich sein, die Oberfläche des 3D-Objektes noch nachzubehandeln, insbesondere zu schleifen, zu strahlen und/oder zu polieren, um eine gewünschte Oberflächengüte zu erhalten. Ist eine hohe Oberflächengüte erwünscht, ist es ggf. erforderlich, die Oberfläche des 3D-Objektes bis zum Grund evtl. Risse bzw. Poren abzutragen. Insbesondere, wenn dies manuell durchgeführt wird, besteht das Risiko, dass ein einer entsprechenden Nachbehandlung unterzogenes gedrucktes 3D-Objekt nicht mehr passgenau der originär gewünschten Formgebung entspricht.

Unabhängig davon muss das gedruckte 3D-Objekt vor dem Schleifen, Strahlen und/oder Polieren regelmäßig nachgehärtet werden. Dazu wird das gedruckte 3D-Objekt nochmals mit Licht in einer für das Aushärten der lichthärtenden Harzformulierung geeigneten Wellenlänge, häufig im UV-Bereich, bestrahlt, um sicherzustellen, dass die Harzformulierung über das gesamte 3D-Objekt hinweg tatsächlich vollständig ausgehärtet ist, womit erst die finale Härte des 3D-Objektes erreicht wird.

Bei aus Harzformulierungen mit 3D-Druckern erzeugten Objekten haften bei Entnahme aus den 3D-Druckern jedoch regelmäßig noch nicht-ausgehärtete Reste der Harzformulierung an, die vor dem Nachhärten zwingend zu entfernen sind, da sie ansonsten ebenfalls ausgehärtet und zu einer Abweichung der originär gewünschten Form des 3D-Objektes führen würden. Hierzu ist es bekannt, die 3D-Objekte mit einem flüssigen Reinigungsmittel zu behandeln, welches die nicht ausgehärteten Reste der Harzformulierung chemisch entfernt, ohne das eigentliche 3D-Objekt bzw. dessen ausgehärtetes Material anzugreifen. Auch sind für diese Reinigung geeignete Vorrichtung, bspw. aus der WO 2020/165430 A1, bekannt. Alternativ sind auch Verfahren beispielsweise aus US 2018/319110 A1 bekannt, bei denen anstelle der chemischen Entfernung von nicht-ausgehärteten Resten ein aushärtbares Gel auf die Oberfläche aufgetragen wird, welches nach dem Aushärten eine glatte Oberfläche ausbildet. Etwaige Unebenheiten werden dabei durch das Gel überspannt. Anstelle eines Gels sind weiterhin auch Verfahren wie aus US 2017/0028432 A1 bekannt, bei denen eine Oberfläche mit einem Polykation und mindestens einem anionischen Mikropartikel behandelt werden, um die Oberfläche eines gedruckten 3D-Objektes zu behandeln.

Ist das gedruckte 3D-Objekt bei seiner späteren Verwendung höheren Belastungen ausgesetzt, bspw. weil es sich bei dem 3D-Objekt um einen Zahnersatz oder ein Zahnimplantat handelt, werden der Harzformulierung Partikel eines Füllstoffs beigegeben, wie bspw. in WO 2020/177921 A1 beschrieben, welche die Festigkeit des gedruckten 3D-Objektes deutlich erhöhen können.

Da diese Füllstoffpartikel durch die bekannten chemischen Reinigungsmittel regelmäßig nicht gelöst werden können, bleiben die Füllstoffpartikel bei einer Reinigung gemäß dem Stand der Technik auf der Oberfläche des 3D-Objektes zurück und haften dort an. Neben einer regelmäßig unerwünschten Veränderung des optischen Eindrucks des 3D-Objektes können durch die Füllstoffpartikel auch die Oberflächenform und -eigenschaften des 3D-Objektes nachteilig beeinflusst werden.

Aufgabe der vorliegenden Erfindung ist es, ein Verfahren zur Nachbehandlung von aus einer lichthärtenden Harzformulierung gedruckten 3-D-Objekten zu schaffen, bei dem die aus dem Stand der Technik bekannten Nachteile nicht mehr oder nur noch in vermindertem Umfang auftreten.

Gelöst wird diese Aufgabe durch ein Verfahren gemäß dem Hauptanspruch. Vorteilhafte Weiterbildungen sind Gegenstand der abhängigen Ansprüche.

Demnach betrifft die Erfindung ein Verfahren zur Nachbehandlung von aus einer lichthärtenden Harzformulierung gedruckten 3-D-Objekten, wobei ein einem 3-D-Drucker entnommenes 3-D-Objekt gemäß den folgenden Schritten nachbehandelt wird:

a) Aussetzen der Oberfläche des 3-D-Objektes einer Nachbehandlungsflüssigkeit umfassend eine lichthärtende Harzformulierung für eine vorgegebene Einwirkzeit, wobei die Nachbehandlungsflüssigkeit und Einwirkzeit so gewählt sind, dass die Nachbehandlungsflüssigkeit innerhalb der Einwirkzeit aufgrund Kapillarität in einen Riss oder eine Pore an der Oberfläche des 3-D-Objektes eindringen kann;

b) Entfernen der oberflächlich auf dem 3-D-Objekt verbliebenen Nachbehandlungsflüssigkeit; und

c) Bestrahlen des 3-D-Objektes mit Licht zum Nachhärten der zum Druck des 3-D-Objekts verwendeten lichthärtenden Harzformulierung und Aushärten der in Risse und/oder Poren an der Oberfläche des 3-D-Objekts eingedrungenen Nachbehandlungsflüssigkeit,

die Viskosität der Nachbehandlungsflüssigkeit bei 23 °C in einem Scherratenbereich von 0,01-10 s$^{-1}$ maximal 2 Pa s beträgt.

Die Erfindung betrifft auch ein Verfahren zum Druck von 3-D-Objekten, bei dem sich das erfindungsgemäße Verfahren zur Nachbehandlung als integraler Bestandteil des Druckvorgangs anschließt.

Die Erfindung liegt die Erkenntnis zugrunde, dass durch ein Aussetzen der Oberfläche des 3-D-Objektes einer Nachbehandlungsflüssigkeit für einen vorgegebenen Zeitraum die Nachbehandlungsflüssigkeit aufgrund Kapillarität in evtl. vorhandene Risse und/oder Poren an der Oberfläche des 3-D-Objektes eindringen und dort auch nach dem Entfernen der oberflächlich auf dem 3-D-Objekt verbliebenen Nachbehandlungsflüssigkeit verbleiben kann. Durch das anschließende Bestrahlen wird nicht nur das 3-D-Objekt nachgehärtet, sondern auch die in evtl. Rissen und/oder Poren verbliebene Nachbehandlungsflüssigkeit ausgehärtet. Im Ergebnis lässt sich durch das erfindungsgemäße Verfahren eine verbesserte Oberflächengüte erreichen. Auch konnte eine erhöhte Festigkeit gegenüber einem lediglich nachgehärteten, jedoch nicht erfindungsgemäß einer Nachbehandlungsflüssigkeit ausgesetzten 3-D-Objekt festgestellt werden.

Das Auffinden grundsätzlich geeigneter Nachbehandlungsflüssigkeit umfassend eine lichthärtende Harzformulierung, die aufgrund Kapillarität in Risse und/oder Poren an der Oberfläche eines gedruckten 3-D-Objektes eindringen kann, ist für den Fachmann problemlos jedenfalls im Rahmen einer überschaubaren Anzahl an Versuchen möglich. Je nach verwendetem Druckverfahren und dabei eingesetztem lichtaushärtenden Harz weist das 3-D-Objekt eine typische Riss- und/oder Porengröße auf. Auf diese typische Riss- und/oder Porengröße hin kann die Nachbehandlungsflüssigkeit gewählt werden, wobei insbesondere Oberflächenspannung der Nachbehandlungsflüssigkeit und der Grenzflächenspannung zwischen Nachbehandlungsflüssigkeit und der Oberfläche des gedruckten 3-D-Objektes für die Kapillarität relevant ist. Auch ist die Viskosität der Nachbehandlungsflüssigkeit für die erforderliche bzw. gewünschte Einwirkzeit zu berücksichtigen, da nur durch eine ausreichend niedrige Viskosität sichergestellt werden kann, dass die Nachbehandlungsflüssigkeit innerhalb der vorgegebenen Einwirkzeit tatsächlich in Risse und/oder Poren eindringt.

Es ist im Übrigen nicht vollständig ausgeschlossen, dass einzelne gedruckte 3-D-Objekte nach ihrem Druck weder Risse noch Poren an ihrer Oberfläche aufweisen. Auch wenn in diesen Sonderfällen eine erfindungsgemäße Nachbehandlung nicht zwingend erforderlich sein mag, ist es - auch da eine entsprechende Riss- und Porenfreiheit nur aufwendig feststellbar ist - unproblematisch, ein entsprechendes 3-D-Objekt dem erfindungsgemäßen Verfahren zu unterziehen. Im Falle einer vollständigen Riss- und Porenfreiheit bleibt die Nachbehandlungsflüssigkeit vollständig oberflächlich und wird folglich auch wieder entfernt, sodass das Verfahren in diesem Sonderfall einer reinen Nachhärtung des 3-D-Objektes ähnelt. Durch Anwendung des erfindungsgemäßen Verfahrens kann jedenfalls auf eine gesonderte und ggf. aufwendige Überprüfung auf Risse und/oder Poren als Grundlage für ein unmittelbares Nachhärten ohne die erfindungsgemäß vorgesehene Behandlung mit Nachbehandlungsflüssigkeit verzichtet werden, sodass sich eine grundsätzliche Anwendung des erfindungsgemäßen Verfahrens empfiehlt.

Es ist bevorzugt, wenn die Oberfläche des 3-D-Objektes vor dem Aussetzen mit der Nachbehandlungsflüssigkeit mit einem, sich von der Nachbehandlungsflüssigkeit unterscheidenden Reinigungsmittel zum Entfernen von oberflächlich am 3-D-Objekt anhaftender Reste nicht oder nicht vollständig ausgehärteter Harzformulierung gereinigt wird. Eine entsprechende Reinigung von gedruckten 3-D-Objekten sowie dafür geeignete Reinigungsmittel sind grundsätzlich im Stand der Technik bekannt. Durch die Verwendung entsprechender Reinigungsmittel besteht jedoch das Risiko, dass auch ausgehärtete Harzformulierung angegriffen wird und so bereits bestehende Risse oder Poren zu erweitern und/oder neue Risse oder Poren zu schaffen. Letzteres gilt insbesondere, wenn das 3-D-Objekt aus einer lichthärtenden Harzformulierung umfassend unlösliche Füllstoffpartikel gedruckt wurde, die anders als ggf. die Harzformulierung, durch das Reinigungsmittel nicht gelöst werden.

Um zu verhindern, dass die nach erfolgter Reinigung angewendete Nachbehandlungsflüssigkeit durch das Reinigungsmittel beeinträchtigt wird, ist es bevorzugt, wenn das Reinigungsmittel vor Aussetzen des 3-D-Objektes mit Nachbehandlungsflüssigkeit vollständig verflüchtigt ist oder entfernt wird.

Bei dem Reinigungsmittel kann es sich um ein flüchtiges organisches Lösungsmittel handeln, welches vorzugsweise Isopropanol und/oder Ethanol umfasst. Entsprechende Reinigungsmittel haben sich als besonders gut geeignet erwiesen. Dabei ist es bevorzugt, wenn das Reinigungsmittel bei 23 °C eine Verdunstungszahl von 1 bis 15 aufweist. Durch eine entsprechende Verdunstung ist sichergestellt, dass zumindest nach einer geeigneten Wartezeit kein Reinigungsmittel mehr auf dem 3-D-Objekt - und insbesondere in dessen oberflächlichen Rissen oder Poren - verbleibt und die Anwendung der Nachbehandlungsflüssigkeit beeinträchtigen könnte.

Es ist jedoch auch möglich und besonders bevorzugt, wenn die Reinigung des 3-D-Objektes mit der Nachbehandlungsflüssigkeit erfolgt, also dass das Aussetzen der Oberfläche des 3-D-Objektes mit der Nachbehandlungsflüssigkeit eine Reinigung der Oberfläche umfasst, wozu die Nachbehandlungsflüssigkeit eine geringere Viskosität als die Viskosität oberflächlich am 3-D-Objekt anhaftender Reste nicht oder nicht vollständig ausgehärteter, beim 3-D-Druck verwendeter Harzformulierung aufweist. Es hat sich gezeigt, dass durch geeignete Wahl der Nachbehandlungsflüssigkeit mit entsprechender Viskosität im Verhältnis zur Viskosität oberflächliche am 3-D-Objekt anhaftender Reste nicht oder nicht vollständig ausgehärteter, beim 3-D-Druck verwendeter Harzformulierung eine mehr als ausreichende Reinigungswirkung erreicht werden kann, ohne dass die Oberfläche des 3-D-Objektes angegriffen wird.

Insbesondere wenn die Nachbehandlungsflüssigkeit zur Reinigung verwendet wird, aber auch in allen anderen Fällen, ist es möglich, dass das Aussetzen der Oberfläche des 3-D-Objektes der Nachbehandlungsflüssigkeit das Eintauchen in ein Nachbehandlungsflüssigkeitsbad umfasst. Im Falle einer Reinigung der Oberfläche des 3-D-Objektes mit Nachbehandlungsflüssigkeit kann das Nachbehandlungsflüssigkeitsbad vorzugsweise als Ultraschallbad ausgestaltet sein oder ein Rührwerk zum Umspülen des 3-D-Objektes mit Nachbehandlungsflüssigkeit aufweisen. Dadurch wird eine Bewegung der Nachbehandlungsflüssigkeit über die Oberfläche des 3-D-Objektes bewirkt, was die Reinigungswirkung verbessern kann. Insbesondere wenn keine Reinigung mit der Nachbehandlungsflüssigkeit erfolgen soll, ist es alternativ zum Eintauchen in ein Nachbehandlungsflüssigkeitsbad auch möglich, die Oberfläche des 3-D-Objektes mit Nachbehandlungsflüssigkeit zu bestreichen. In diesem Fall ist u. a. die Viskosität der Nachbehandlungsflüssigkeit derart zu wählen, dass die Nachbehandlungsflüssigkeit über die gesamte vorgegeben Einwirkzeit auf der Oberfläche des 3-D-Objektes anhaftet und nicht frühzeitig abfließt.

Unabhängig davon, ob das 3-D-Objekt in die Nachbehandlungsflüssigkeit eingetaucht oder mit dieser bestrichen wird, ist vorzugsweise sicherzustellen, dass die Nachbehandlungsflüssigkeit während der vorgegebenen Einwirkzeit vollflächig auf der gesamten Oberfläche des 3-D-Objektes steht, damit sichergestellt ist, dass die Nachbehandlungsflüssigkeit in sämtliche Risse und/oder Poren an der Oberfläche des 3-D-Objektes eindringen kann.

Es ist bevorzugt, wenn das Entfernen der oberflächlich auf dem 3-D-Objekt verbliebenen Nachbehandlungsflüssigkeit und/oder das Entfernen von Reinigungsmittel durch Abblasen der Nachbehandlungsflüssigkeit und/oder des Reinigungsmittels erfolgt. Das Abblasen bietet gegenüber anderen denkbaren Verfahren zum Entfernen oberflächlich anhaftender Flüssigkeiten den Vorteil, dass aufgrund von Kapillarität in Risse oder Poren eingedrungene Flüssigkeiten durch das Abblasen (zumindest bei geeigneten Parametern für das Abblasen) regelmäßig nicht entfernt werden. Das Auffinden geeigneter Parameter für das Abblasen stellt den Fachmann dabei vor keine besonderen Herausforderungen und kann zumindest durch eine überschaubare Anzahl von Versuchen erfolgen. Sollte auch das Reinigungsmittel aufgrund von Kapillarität in Risse und/oder Poren des 3-D-Objektes eindringen können, ist dann ggf. ein anderes Verfahren zum Entfernen des Reinigungsmittels auch aus den Rissen und Poren zu wählen oder es ist vor dem Einsatz der Nachbehandlungsflüssigkeit abzuwarten, bis sich das Reinigungsmittel vollständig verflüchtigt.

Es ist bevorzugt, wenn die Nachbehandlungsflüssigkeit bei 23 °C und einer Scherrate von 1 s$^{-1}$ eine Viskosität von 2 Pa s bis 0,005 Pa s, vorzugsweise von 1,5 Pa s bis 0,01 Pa s, weiter vorzugsweise von 1 Pa s bis 0,01 Pa s aufweist. Entsprechende Werte haben sich für eine Vielzahl von Anwendungsfällen des erfindungsgemäßen Verfahrens als vorteilhaft erwiesen. Die vorstehend genannten Viskositäten werden wie nachfolgend in Zusammenhang mit den Ausführungsbeispielen beschrieben ermittelt. Geeignete Rheometer sind Schubspannungs-gesteuerte Rheometer mit Platte-Platte-Geometrie die eine Umrechnung der Messdaten in Scherraten-abhängige Viskositäten erlauben.

Es ist bevorzugt, wenn die Nachbehandlungsflüssigkeit bzw. die lichthärtende Harzformulierung wenigstens ein radikalisch fotopolymerisierbares Monomer, vorzugsweise mehr als ein radikalisches fotopolymerisierbares Monomer und/oder wenigstens ein Additiv umfasst.

Das wenigstens eine radikalische photopolymerisierbare Monomer kann ausgewählt sein aus der Gruppe der (Meth)acrylate, bevorzugt umfassend Monomere, bestehend aus mehreren, bevorzugt zwei (Meth)acrylatgruppen und einer Gruppe, die 2 bis 12 Kohlenstoffatome aufweist und ausgewählt ist aus linearen oder verzweigten Alkyl- und Alkylengruppen, aliphatischen cyclischen Kohlenwasserstoffgruppen, Polyoxyalkylengruppen und einer Kombination dieser Gruppen, bspw. PRDMA, 1,3Propandioldimethacrylat; BDMA, 1,3-Butandioldimethacrylat; BDDMA, 1,4-Butandioldimethacrylat; PDDMA, 1,5-Pentandioldimethacrylat; NPGDMA, Neopentylglykoldimethacrylat; HDDMA, 1,6-Hexandioldimethacrylat; NDDMA, 1,9-Nonandioldimethacrylat; DDDMA, 1,10-Decandioldimethacrylat; DDDDMA, 1,12-Dodecandioldimethacrylat; PRDA, 1,3-Propandioldiacrylat; BDA, 1,3-Butandioldiacrylat; BDDA, 1,4-Butandioldiacrylat; PDDA, 1,5-Pentandioldiacrylat; NPGDA, Neopentylglykoldiacrylat; HDDA, 1,6-Hexandioldiacrylat; NDDA, 1,9-Nonandioldiacrylat; DDDA, 1,10-Decandioldiacrylat; DDDDA, 1,12-Dodecandioldimethacrylat; EGDMA, Ethylenglykoldimethacrylat; DEGDMA, Diethylenglykoldimethacrylat; TEDMA, Triethylenglykoldimethacrylat; TEGDMA, Tetraethylenglykoldimethacrylat; EGDA, Ethylenglykoldiacrylat; DEGDA, Diethylenglykoldiacrylat; TEDA, Triethylenglykoldiacrylat; TEGDA, Tetraethylenglykoldiacrylat; PEG200DMA, Polyethylenglykol 200 Dimethacrylat; PEG300DMA, Polyethylenglykol 300 Dimethacrylat; PEG400DMA, Polyethylenglykol 400 Dimethacrylat; PEG600DMA, Polyethylenglykol 600 Dimethacrylat; PEG200DA, Polyethylenglykol 200 Diacrylat; PEG300DA, Polyethylenglykol 300 Diacrylat; PEG400DA, Polyethylenglykol 400 Diacrylat; PEG600DA, Polyethylenglykol 600 Diacrylat; PPGDMA, Polypropylenglykoldimethacrylat; PPGDA, Polypropylenglykoldiacrylat; NPG(PO)2DMA, Propoxyliertes (2) Neopentylglykoldimethacrylat; NPG(PO)2DA Propoxyliertes (2) Neopentylglykoldiacrylat.

Das wenigstens eine radikalische photopolymerisierbare Monomer kann auch ausgewählt sein aus der Gruppe der (Meth)acrylate, bevorzugt umfassend Monomere, bestehend aus einer (Meth)acrylatgruppe und einem Rest, der 2 bis 12 Kohlenstoffatome aufweist und ausgewählt ist aus linearen oder verzweigten Alkyl- und Alkylengruppen, aliphatischen cyclischen Kohlenwasserstoffgruppen, Polyoxyalkylengruppen und einer Kombination dieser Gruppen, bspw. EMA, Ethylmethacrylat; Allylmethacrylat; Allylacrylat; n-BMA, n-Butylmethacrylat; IBMA, Isobutylmethacrylat, t-BMA, tert-Butylmethacrylat; EHMA, 2-Ethylhexylmethacrylat; LMA, Laurylmethacrylat; TDMA, Tridecylmethacrylat; CHMA, Cyclohexylmethacrylat; BZMA, Benzylmethacrylat; IBOMA, Isobornylmethacrylate; HEMA, 2-Hydroxyethylmethacrylat; HPMA, 2-Hydroxypropylmethacrylat; DMMA, Dimethylaminoethylmethacrylat; DEMA, Diethylaminoethylmethacrylat; GMA, Glycidylmethacrylat; THFMA, Tetrahydrofurfurylmethacrylat; ETMA, Ethoxyethylmethacrylat; AIB, Isobutylacrylat; TBA, tert-Butylacrylat; LA, Laurylacrylat; CEA, Cetylacrylat; STA, Stearylacrylat; CHA, Cyclohexylacrylat; BZA, Benzylacrylat; IBOA, Isobornylacrylat; 2-MTA, 2-Methoxyethylacrylat; ETA, 2-Ethoxyethylacrylat; EETA, Ethoxyethoxyethylacrylat; PEA, 2Phenoxyethylacrylat; THFA, Tetrahydrofurfurylacrylat; HEA, 2-Hydroxyethylacrylat; HPA, 2-Hydroxypropylacrylat; 4HBA, 4-Hydroxybutylacrylat; DMA, Dimethylaminoethylacrylat; 3F, Trifluorethylacrylat; 17F, Heptadecafluorodecylacrylat; 2-PEA, 2-Phenoxyethylacrylat; TBCH, 4-tert-butylcyclohexylacrylat; DCPA, Dihydrodicyclopentadienylacrylat; EHA, 2-Ethylhexylacrylat; und 3EGMA, Triethylenglycolmonomethacrylat.

Weiterhin kann das wenigstens eine radikalisch photopolymerisierbare Monomer ausgewählt sein aus der Gruppe der (Meth)acrylate, umfassend Monomer(e), bestehend aus mehreren, bevorzugt zwei (Meth)acrylatgruppen und einer Gruppe, die mindestens eine Gruppe umfasst, ausgewählt aus einer Urethangruppe, einer Bisphenol A-Gruppe, einer aliphatischen polycyclischen Gruppe und einer Oligoestergruppe, bspw. Bis-MA, Bisphenol-A-dimethacrylat; Bis-GMA, Bisphenol-A-glyceroldimethacrylat; BPA(EO)DMA, Ethoxyliertes Bisphenol-A-Dimethacrylat(EO=1-30); BPA(PO)DMA, Propoxyliertes Bisphenol-A-Dimethacrylat(PO=1-30); BPA(EO)DA, Ethoxyliertes Bisphenol-A-Diacrylat(EO=1-30); BPA(PO)DA, Propoxyliertes Bisphenol-A-Diacrylat(PO=1-30); BPA(PO)GDA, Propoxyliertes BisphenolA-glyceroldiacrylat; UDMA, Diurethandimethacrylat; TCDD(M)A und PEM-665.

Ist mehr als ein radikalisches photopolymerisierbares Monomer vorgesehen, sind die wenigstens zwei Monomere vorzugsweise beliebig aus den vorstehend aufgeführten Monomeren ausgewählt.

Es ist grundsätzlich möglich, dass die Nachbehandlungsflüssigkeit keine Additive und insbesondere auch keine (Photo)initiatoren umfasst. In diesem Fall kann die Nachbehandlungsflüssigkeit bzw. deren lichthärtenden Harzformulierung bei der erfindungsgemäß vorgesehen Bestrahlung mit im Bereich der Oberfläche des 3-D-Objektes verbliebenen (Photo)initiatoren reagieren und aushärten.

Die Nachbehandlungsflüssigkeit kann aber ein oder mehrere Additive umfassen, um die Eigenschaften der Nachbehandlungsflüssigkeit im nicht-ausgehärteten und/oder ausgehärteten Zustand zu beeinflussen. Das oder die Additive können ausgewählt sein aus der Gruppe der (Photo)initiatoren, Stabilisatoren, Farbstoffen und nanoskaligen Füllstoffen. Geeignete nanoskalige Füllstoffe sind bspw. zerkleinerte Partikel einer pyrogenen Kieselsaure, die eine in einem Dispergierprozess mit Silanen erhältliche modifizierte Oberflächen aufweisen. Bevorzugte nanoskalige Füllstoffe weisen eine mittlere Partikelgröße kleiner 600 nm auf.

Es ist bevorzugt, dass der Anteil an Additiven in der Nachbehandlungsflüssigkeit weniger als 20 Gew.-%, vorzugsweise weniger als 10 Gew.-%, weiter vorzugsweise weniger als 5 Gew.-%, weiter vorzugsweise weniger als 2 Gew.-%.

Die Nachbehandlungsflüssigkeit kann auch flüchtige organische Verbindungen, wie bspw. Lösungsmittel wie Ethanol oder Isopropanol, oder flüchtige Monomere wie Methylmethacrylat umfassen. Der Anteil entsprechender Verbindungen beträgt vorzugsweise weniger als 5 Gew.-%, weiter vorzugsweise weniger als 2 Gew.-%.

Grundsätzlich ist bevorzugt, wenn die Nachbehandlungsflüssigkeit zu wenigstens 80 Gew.-%, vorzugsweise zu wenigstens 90 Gew.-%, weiter vorzugsweise zu wenigstens 95 Gew.-%, weiter vorzugsweise zu wenigstens 98 Gew.-% aus einem oder mehreren radikalisch photopolymerisierbaren Monomer(en) besteht.

Es ist bevorzugt, wenn die Nachbehandlungsflüssigkeit derart gewählt ist, dass sie bei Bestrahlen des 3-D-Objektes zum Nachhärten unmittelbar mitaushärtet. In anderen Worten sollen also die für den 3-D-Druck verwendete Harzformulierung und die Harzformulierung der Nachbehandlungsflüssigkeit bei derselben Wellenlänge und/oder nach demselben Polymerisationsprinzip (also bspw. beide durch radikalische Polymerisation) aushärten. Dadurch kann das Bestrahlen effizient und in der Regel mit für das Nachhärten von 3-D-Objekten geeigneten Geräten aus dem Stand der Technik durchgeführt werden. Auch kann regelmäßig eine dauerhafte Verbindung zwischen polymerisiertem 3-D-Objekt und polymerisiertem Nachbehandlungsmittel erzeugt werden.

Das erfindungsgemäße Verfahren zum Druck von 3-D-Objekten zeichnet sich dadurch aus, dass sich an den 3-D-Druck eines 3-D-Objektes aus einer lichthärtenden Harzformulierung ein Verfahren gemäß den vorstehenden Ausführungen anschließt.

Der 3-D-Druck kann dabei gemäß einem beliebigen Verfahren aus dem Stand der Technik erfolgen, also bspw. Stereolithographie- oder ein DLP-Druckverfahren sein. Zur Erläuterung der daran anschließenden Verfahrensschritte wird auf die vorstehenden Ausführungen verwiesen.

Die Erfindung wird nun anhand vorteilhafter Ausführungsformen unter Bezugnahme auf die beigefügte Zeichnung beispielhaft beschrieben. Es zeigt:

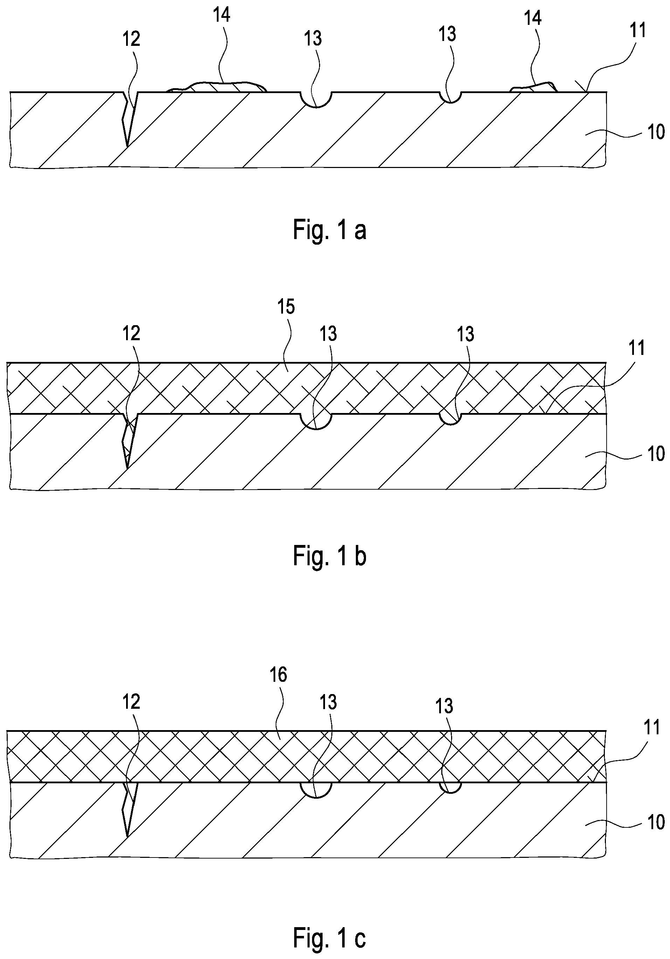

Figur 1a-f:    Prinzipskizzen zum erfindungsgemäßen Verfahren.

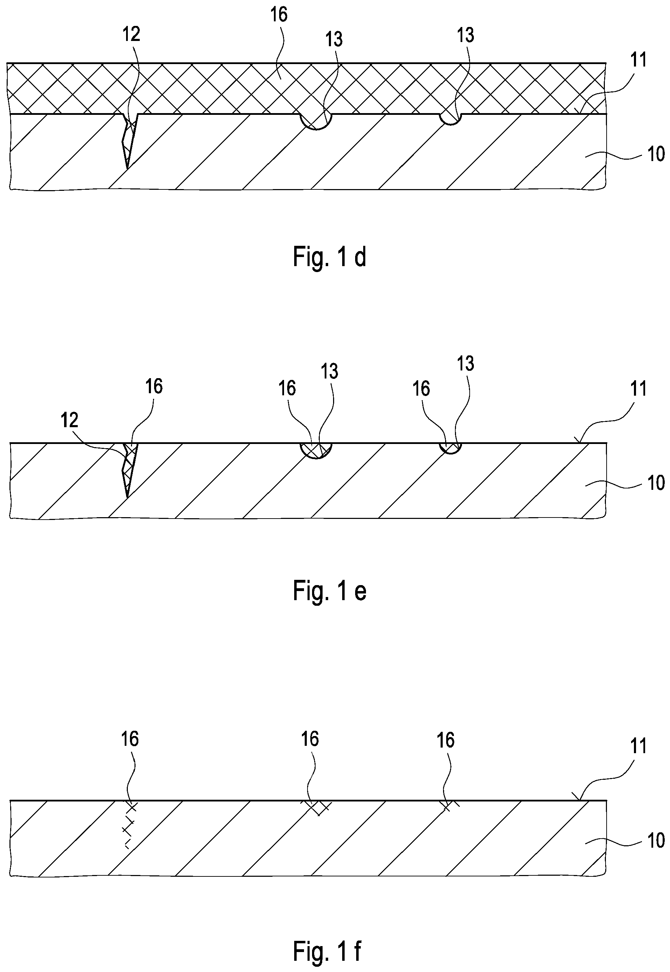

Bevor später auf konkrete Ausführungsbeispiele für mit Hilfe des erfindungsgemäßen Verfahrens nachbehandelte 3-D-Objekte eingegangen wird, wird zunächst das Prinzip das erfindungsgemäße Verfahren anhand der Figur 1 und einem beispielhaften Verfahrensablauf erläutert.

Bei einem aus einer lichthärtenden Harzformulierung gedruckten 3-D-Objekt 10, von dem in Figur 1 jeweils nur stark vergrößert ein kleiner Oberflächenabschnitt in einer Schnittansicht dargestellt ist, bestehen in der Regel bereits unmittelbar nach der Entnahme des 3-D-Objektes 10 aus einem 3-D-Drucker an der Oberfläche 11 Risse 12 und/oder Poren 13. Außerdem haften an der Oberfläche 11 noch Reste 14 von nicht ausgehärteter Harzformulierung aus dem 3-D-Drucker an (vgl. Figur 1a). Die Harzformulierung des 3-D-Objektes 10 ist zu diesem Zeitpunkt bereits grundsätzlich fest, wenn auch noch nicht final ausgehärtet, sodass das 3-D-Objekt 10 seine finale Festigkeit noch nicht erreicht hat. Eine intensive mechanische Bearbeitung der Oberfläche 11 des 3-D-Objektes 10 zu diesem Verfahrensstadium scheidet daher aus.

Um dennoch die Reste 14 von nicht ausgehärteter Harzformulierung zu entfernen, wird daher zunächst ein flüssiges Reinigungsmittel 15 verwendet, welches auf die Oberfläche 11 des 3-D-Objektes 10 aufgebracht wird, und die Reste 14 von der Oberfläche 11 löst (vgl. Figur 1b). Bei dem Reinigungsmittel 15 kann es sich bspw. um Isopropanol oder Ethanol handeln, welches, wie in Figur 1b dargestellt, auch in die Risse 12 und Poren 13 eindringen kann. Auch wenn ein entsprechendes Reinigungsmittel Reste 14 von nicht ausgehärteter Harzformulierung gut entfernen kann, besteht das Risiko, dass das Reinigungsmittel auch ordnungsgemäß während des 3-D-Drucks ausgehärtete Harzformulierung angreift, und so bspw. die Risse 12 oder Poren 13 vergrößert oder gar neu Risse oder Poren schafft.

Bevorzugt kann die Reinigung daher auch mit der nachfolgend noch näher beschriebenen Nachbehandlungsflüssigkeit 16 erfolgen. Dazu weist die Nachbehandlungsflüssigkeit 16 eine geringere Viskosität als die Viskosität oberflächliche am 3-D-Objekt 10 anhaftender Reste 14 nicht oder nicht vollständig ausgehärteter, beim 3-D-Druck verwendeter Harzformulierung auf. Es hat sich gezeigt, dass die Reste 14 bei ausreichender Einwirkzeit und insbesondere bei induzierter Bewegung der Nachbehandlungsflüssigkeit 16 durch einen Ultraschallgeber oder ein Rührwerk, eine ausreichende Reinigungswirkung erreicht werden kann. Dies gilt auch, wenn die Nachbehandlungsflüssigkeit 16 dabei (anders als in Figur 1b dargestellt) ggf. nicht unmittelbar in die Risse 12 oder Poren 13 eindringen mag, womit die Reinigungswirkung in diesen Bereichen grundsätzlich begrenzt ist.

Erfolgte die Reinigung mit einem flüssigen Reinigungsmittel 15 abweichend von der Nachbehandlungsflüssigkeit 16, so wird das Reinigungsmittel 15 zunächst vollständig entfernt, bevor anschließend die Oberfläche 11 des 3-D-Objektes 10 vollflächig der Nachbehandlungsflüssigkeit 16 ausgesetzt wird (Figur 1c). Je nach Reinigungsmittel 15 kann auch eine gewisse Zeit abgewartet werden, bis sich das Reinigungsmittel 15 vollständig verflüchtigt hat.

Die Nachbehandlungsflüssigkeit 16 umfasst eine lichthärtende Harzformulierung und ist derart gewählt, dass die Nachbehandlungsflüssigkeit 16 innerhalb einer geeignet gewählten und vorgegebenen in die Risse 12 und Poren 13 durch Kapillarität eindringt (vgl. Figur 1d). Es ist für den Fachmann dabei ohne Weiteres möglich, eine Nachbehandlungsflüssigkeit 16 mit den erforderlichen Eigenschaften aufzufinden und eine für die Nachbehandlungsflüssigkeit 16 geeignete Einwirkzeit festzulegen. Zum Aussetzen des 3-D-Objektes 10 der Nachbehandlungsflüssigkeit 16 kann das 3-D-Objekt 10 mit der Nachbehandlungsflüssigkeit bestrichen oder in ein Bad der Nachbehandlungsflüssigkeit 16 eingetaucht werden.

Nach Ablauf der Einwirkzeit wird die auf der Oberfläche 11 des 3-D-Objektes 10 verbliebende Nachbehandlungsflüssigkeit 16 mit Druckluft abgeblasen, wobei die in Risse 12 und/oder Poren 13 eingedrungene Nachbehandlungsflüssigkeit 16 dort verbleibt (vgl. Figur 1e).

Abschließend wird das 3-D-Objekt 10 durch Bestrahlung mit Licht in der geeigneten Wellenlänge für die zum Druck verwendete Harzformulierung nachgehärtet. Ist die Harzformulierung der Nachbehandlungsflüssigkeit 16 geeignet gewählt, um bei derselben Wellenlänge auszuhärten, ergibt sich eine durchgehende Oberfläche 11, bei der zuvor vorhandene Risse 12 und/oder Poren 13 beseitigt sind (vgl. Figur 1f).

Das in Figur 1a-f dargestellte grundsätzliche Prinzip des erfindungsgemäßen Verfahrens wurde anhand konkreter Ausführungsbeispiele verifiziert.

**Ausführungsbeispiele**

Bei den nachfolgend beschriebenen Ausführungsbeispielen und durchgeführten Prüfungen wird jeweils ein 3-D-Objekt als Prüfkörper verwendet, wobei der Prüfkörper je nach durchzuführender Prüfung eine Quaderform oder die Form einer Zahnkrone aufwies. Die 3-D-Objekte wurden in einem bekannten und am Markt verfügbaren 3-D-Drucker - nämlich dem Modell "D20 II" der Firma Rapid Shape GmbH, Heimsheim, Deutschland - aus dem ebenfalls am Markt verfügbaren 3-D-Druckharz "LuxaPrint® ProCB" der Firma DMG, Hamburg, Deutschland hergestellt. Das fragliche 3-D-Druckharz enthält SiO2-Fullstoffpartikel in einer Matrix aus UDMA (Diurethandimethacrylat), TEDMA (Triethylenglykoldimethacrylat), HDDMA (1,6-Hexandioldimethacrylat), Bis-GMA (Bisphenol-A-glyceroldimethacrylat), IBOMA (Isobornylmethacrylate), Omnirad® TPO (2,4,6-Trimethylbenzoyldiphenylphosphinoxid) und Additiven. "Omnirad® TPO" ist ein Handelsname der Firma IGM Resins B.V., Waalwijk, Niederlande.

Bei den Ausführungsbeispielen werden alternativ die folgenden beiden Nachbehandlungsflüssigkeiten verwendet.

Bei der Nachbehandlungsflüssigkeit 1 handelt es sich um eine Mischung der Komponenten:

| Komponente | Anteil [Gew.-%] |
|---|---|
| TEDMA | 33,97 |
| HDDMA | 23,62 |
| UDMA | 21,23 |
| IBOMA | 19,50 |
| Omnirad® TPO, IGM Resins | 01,20 |
| Tinuvin® 622 SF - HALS, BASF | 00,20 |
| TMPM (2,2,6,6 Tetramethyl-4-piperidyl Methacrylat) | 00,20 |
| BHT (2,6-Di-tert-butyl-4-methylphenol) | 00,08 |

Bei "Tinuvin® 622" handelt es sich um Poly (4-Hydroxy-2,2,6,6-tetramethyl-1-piperidinethanol-alt-1,4-Butandisäure). Die Bezeichnung "Tinuvin® 622" ist ein Handelsname der Firma BASF, Ludwigshafen, Deutschland.

Die so zusammengesetzte Mischung wurde so lange gerührt, bis eine homogene Lösung vorlag.

Als Nachbehandlungsflüssigkeit 2 wurde der kommerziell erhältliche photopolymerisierbare Lack "LuxaGlaze®" der Firma DMG, Hamburg, Deutschland, verwendet.

Von beiden Nachbehandlungsflüssigkeiten wurde die dynamische Viskosität ermittelt. Dazu wurde ein Messgerät vom Typ "Kinexus Pro KNX 2100" der Firma Malvern Instruments Ltd., Malvern, Vereinigtes Königreich mit einer Platte-Platte-Geometrie bei einem Durchmesser von 25 mm für die obere Platte verwendet. Für die Messung wurde der Schubspannungsbereich von 0,01 bis 50 Pa in einem logarithmischen Stufenverfahren mit 2 Punkten pro Dekade überstrichen, wobei die Schubspannung jeweils für die Dauer von 1,00 min an jedem Messpunkt konstant gehalten wurde. Angegeben sind jeweils die bei einer Schubspannung von 50 Pa sowie bei einer Scherrate von 1 s$^{-1}$ ermittelte Wert für die dynamische Viskosität. Die Ermittlung der Viskosität bei einer Scherrate von 1 s$^{-1}$ erfolgte durch lineare Interpolation der Viskosität zwischen den jeweils benachbarten von der Software des Gerätes errechneten Punkten entlang der Scherratenskala. Die Messung erfolgte bei einer konstanten Probentemperatur von 23 °C, die von dem Messgerät überwacht wurde.

Für die Nachbehandlungsflüssigkeit 1 ergab sich so eine dynamische Viskosität von 16 mPa s bei 50 Pa Schubspannung und 1 s$^{-1}$ Scherrate.

Die dynamische Viskosität der Nachbehandlungsflüssigkeit 2 wurde zu 390 mPa s bei 50 Pa Schubspannung und bei einer Scherrate von 1 s$^{-1}$ zu 960 mPa s ermittelt.

In einer ersten Versuchsreihe wurden Biegefestigkeit von dafür hergestellten Prüfkörpern nach ISO 4049:2009 geprüft. Die Prüfkörper hatten dabei eine Quaderform mit den Dimensionen x ≈ 40 mm, y = 1,9 ± 0,1 mm und z = 1,95 ± 0,15 mm, wobei diese Dimensionen jeweils nach durchlaufen der nachfolgenden Nachbehandlungsschritte ermittelt wurden.

Sämtliche Prüfkörper wurden nach erfolgtem Druck mit einer Schichtstärke von 0,050 mm dem 3-D-Drucker entnommen und mit Druckluft vorgereinigt. Anschließend wurden die Prüfkörper in einem automatischen Reinigungsgerät vom Typ "3Dewash" der Firma DMG, Hamburg, Deutschland, mit Isopropanol als Reinigungsmittel gereinigt und mittels Druckluft getrocknet. Die vom 3-D-Druck verbliebene Stützstrukturen auf einer Seite des Prüfkörpers wurden entfernt.

Für Prüfkörper eines Vergleichsbeispiels 1 erfolgte keine erfindungsgemäße Nachbehandlung. Vielmehr wurden die Prüfkörper unmittelbar nach der Reinigung in einer Belichtungseinheit vom Typ "3Decure" der Firma DMG, Hamburg, Deutschland, bei voller Lichtleistung und einem Druck von 50 mbar für 15 Minuten von allen Seiten nachbelichtet. Es erfolgte dann eine Nachbehandlung der Prüfkörper, bei denen die Anbindungsstellen der Stützstruktur auf der einen Seite der Prüfkörper beschliffen wurden, bevor anschließend die vollständige Oberfläche der Prüfkörper poliert wurde. Die Prüfkörper wurden dann für 24 Stunden bei 37 °C in Wasser gelagert.

Bei den Prüfkörpern eines Ausführungsbeispiels 1 wurde nach Entnahme aus dem 3-D-Drucker mithilfe eines Mikopinsels die Nachbehandlungsflüssigkeit 1 auf die Oberfläche der Prüfkörper aufgetragen. Nach 30 Sekunden Einwirkzeit wurde die auf der Oberfläche befindliche Nachbehandlungsflüssigkeit 1 mittels Druckluft abgeblasen, bevor die Prüfkörper anschließend identisch zum Vergleichsbeispiel 1 nachgehärtet, nachbearbeitet und gelagert wurde.

Die Prüfkörper eines Ausführungsbeispiels 2 wurde analog zum Ausführungsbeispiel 1 nachbehandelt, mit dem einzigen Unterschied, dass anstelle der Nachbehandlungsflüssigkeit 1 die Nachbehandlungsflüssigkeit 2 verwendet wurde.

Für das Ausführungsbeispiel 3 wurden die Prüfkörper in ein Tauchbad aus Nachbehandlungsflüssigkeit 1 eingetaucht und nach einer Einwirkzeit von 30 Sekunden wieder entnommen. Unmittelbar danach wurde auf der Oberfläche befindliche Nachbehandlungsflüssigkeit 1 mittels Druckluft abgeblasen, bevor die Prüfkörper anschließend identisch zum Vergleichsbeispiel 1 nachgehärtet, nachbearbeitet und gelagert wurde.

Für die so hergestellten Prüfkörper des Vergleichsbeispiels 1 und der Ausführungsbeispiele 1 bis 3 wurde dann die Biegefestigkeit nach ISO 4049:2009 ermittelt. Die Messungen erfolgten auf Universalprüfgeräten vom Typ "Z010" oder "Z2.5" der Firma ZwickRoell GmbH & Co. KG, Ulm, Deutschland, bei einer konstanten Vorschubgeschwindigkeit von 0,8 mm/min bis zum Bruch. Für die gemäß ISO 4049:2009 vorgegebene Dreipunktbelastung wurde eine dafür vorgesehene Biegevorrichtung mit parallel angeordneten Stahlwalzen verwendet, wobei zwei Stahlwalzen mit Durchmesser 2 mm und bei einem Achsabstand von 20 mm als Auflage und eine dritte Stahlwalze mit Durchmesser 2 mm als Stempel in der Mitte zwischen den beiden anderen Stahlwalzen verwendet wurde. Erfolgt die Durchbiegung eines quaderförmigen Prüfkörpers bis zum Bruch, ergibt sich aus der Formel

$$\sigma = \frac{3\,F\,l}{2\,b\,h^2}$$

die Biegefestigkeit σ, wobei F die maximal auf den Probenkörper ausgeübte Kraft (in Newton), l die Stützweite, also der Abstand zwischen der ersten und zweiten Stahlwalze (in mm), b die Breite des Prüfköpers vor der Prüfung (in mm) und h die Höhe des Prüfkörpers vor der Prüfung (in mm) ist.

Es wurden verschiedene Messreihen für das Vergleichsbeispiel 1 und die Ausführungsbeispiele 1 bis 3 durchgeführt. In einer ersten Messreihe 1 wurden die Prüfkörper des Vergleichsbeispiels 1, des Ausführungsbeispiels 1 und des Ausführungsbeispiels 2 jeweils mit der beschliffenen Seite, an welcher die vom 3-D-Druck stammende Stützstruktur angeordnet war, nach oben bzw. zur dritten Stahlwalze hin in die Biegevorrichtung eingelegt. In der zweiten Messreihe 2 wurden die Prüfkörper des Vergleichsbeispiels 1, des Ausführungsbeispiels 1 und des Ausführungsbeispiels 3 jeweils mit der besagten beschliffenen Seite nach unten bzw. zur ersten und zweiten Stahlwalze hin in die Biegevorrichtung eingelegt. Für jedes Vergleichs- oder Ausführungsbeispiels wurden jeweils sechs Prüfkörper vermessen, womit sich das folgende Bild ergab:

|  | Messreihe 1 Biegefestigkeit [MPa] | Messreihe 2 Biegefestigkeit [MPa] |
|---|---|---|
| Vergleichsbeispiel 1 | 67,6 ± 19 | 62,2 ± 6, 83 |
| Ausführungsbeispiel 1 | 108 ± 13,8 | 113 ± 11,5 |
| Ausführungsbeispiel 2 | 102 ± 7,83 | - |

(fortgesetzt)

|  | Messreihe 1 Biegefestigkeit [MPa] | Messreihe 2 Biegefestigkeit [MPa] |
| --- | --- | --- |
| Ausführungsbeispiel 3 | - | 99,58 ± 17,84 |

Wie unmittelbar ersichtlich, weisen die mit dem erfindungsgemäßen Verfahren nachbehandelten Prüfkörper bzw. 3-D-Objekte gegenüber nicht entsprechend nachbehandelten Prüfkörpern eine deutlich verbesserte Biegefestigkeit auf.

In einer weiteren Versuchsreihe wurde die Dimensionsgenauigkeit gedruckter Zahnkronen bei Anwendung des erfindungsgemäßen Verfahrens überprüft.

Dazu wurden identische Zahnkronen per 3-D-Druck mit einer Schichtstärke von 0,05 mm erzeugt, wobei sich an der Okklusalfläche eine Stützstruktur befand. Die Stützstruktur wurde entfernt und die Zahnkronen mit Druckluft vorgereinigt.

Die Zahnkrone eines Vergleichsbeispiels 2 wurde analog zum Vergleichsbeispiel 1 behandelt. Die Zahnkrone wurde also unmittelbar nach einer Reinigung in einem automatischen Reinigungsgerät vom Typ "3Dewash" der Firma DMG, Hamburg, Deutschland, mit Isopropanol als Reinigungsmittel und anschließender Trocknung per Druckluft in einer Belichtungseinheit vom Typ "3Decure" der Firma DMG, Hamburg, Deutschland, bei voller Lichtleistung und einem Druck von 50 mbar für 15 Minuten von allen Seiten nachbelichtet. Es erfolgte dann eine Nachbehandlung der Zahnkrone, bei der die Okklusalfläche der Zahnkrone - also die Fläche, an welcher die Stützstruktur angebunden war - beschliffen wurden, bevor anschließend die vollständige Oberfläche der Zahnkrone poliert wurde. Die Zahnkrone wurde dann für 24 Stunden bei 37 °C in Wasser gelagert.

Bei der Zahnkrone des Vergleichsbeispiels 3 wurde die Zahnkrone in Unterschied zu Vergleichsbeispiel 2 nicht in einem automatischen Reinigungsgerät, sondern lediglich mit einem Tuch und Isopropanol gereinigt. Die nachfolgende Nachbelichtung, Nachbearbeitung und Lagerung erfolgte dann wiederum analog zum Vergleichsbeispiel 2 und somit auch analog zu Vergleichsbeispiel 1.

Die Zahnkrone des Vergleichsbeispiels 4 wurde nach erfolgter Vorreinigung mit einem Tuch, einem Mikropinsel und Ethanol gereinigt. Die dann erfolgende Nachbelichtung, Nachbearbeitung und Lagerung erfolgte analog zu den übrigen Vergleichsbeispielen 1 bis 3.

Die Zahnkrone eines Ausführungsbeispiels 4 wurde entsprechenden dem Ausführungsbeispiel 1 gereinigt und nachbehandelt.

Die Zahnkrone eines Ausführungsbeispiels 5 wurde entsprechenden dem Ausführungsbeispiel 2 gereinigt und nachbehandelt.

In einem Ausführungsbeispiel 6 wurde die Zahnkrone zu Reinigungszwecken zunächst für 3 Minuten in ein Ultraschall-Tauchbad aus 50 ml TEDMA als Nachbehandlungsflüssigkeit eingelegt, wobei die Zahnkrone vollständig von der Nachbehandlungsflüssigkeit umgeben war. Anschließend wurde die Zahnkrone entnommen, kurz mit Druckluft gereinigt und anschließend für zwei Minuten erneut in ein Ultraschallbad aus 50 ml TEDMA-eingelegt. Dabei handelte es sich um "frisches" TEDMA, und nicht etwa das bereits zuvor zur Reinigung genutzte Nachbehandlungsflüssigkeit. Anschließend wurde die Zahnkrone entnommen, und die an der Oberfläche der Zahnkrone noch anhaftende Nachbehandlungsflüssigkeit mit Druckluft abgeblasen. Die dann erfolgende Nachbelichtung, Nachbearbeitung und Lagerung erfolgte analog zu den übrigen Vergleichs- bzw. Ausführungsbeispielen.

Zur Überprüfung der Dimensionsgenauigkeit wurde ein Teil der Vergleichs- und Ausführungsbeispiele mit einem 3-D-Scanner vom Typ "ATOS Core" der Firma GOM GmbH, Braunschweig, Deutschland vermessen, nachdem sie durch Besprühen mit dem "Nord-Test Entwickler U89" der Firma Helling GmbH, Heidgraben, Deutschland von dem 3-D-Scanner erfassbar gemacht wurden. Die Auswertung der Scan-Daten erfolgte auf Basis der für den 3-D-Druck verwendeten 3-D-Daten (hier im STL-Dateiformat). Zur Bestimmung der Dimensionsgenauigkeit wurde das Perzentil der Fläche unterhalb einer Abweichung von ± 60 μm gegenüber den 3-D-Daten ermittelt.

Die Dimensionsgenauigkeit des Vergleichsbeispiels 2 und des Ausführungsbeispiels 6 sind dabei mit 94,1 % bzw. 95,8 % als sehr gut zu bewerten. Hingegen ist die Dimensionsgenauigkeit des Vergleichsbeispiels 3 mit nur 86,9 % gering. Insbesondere Erhebungen (von bis zu 0,5 mm) auf den Innenflächen der Zahnkrone des Vergleichsbeispiels 3, die auf eine unvollständige Entfernung von an der Krone anhaftendem 3-D-Druckharz, welches durch die Nachbelichtung ausgehärtet wurde, hinweist, machen die Zahnkrone praktisch unbrauchbar. Gleiches gilt für das Vergleichsbeispiel 4, bei dem vergleichbare Erhebungen festgestellt wurden. Ebenso wie Vergleichsbeispiel 2 und Ausführungsbeispiel 6 zeigen auch Ausführungsbeispiele 4 und 5 keine solche Erhebungen. Angesichts optischer Vergleiche zwischen den Zahnkronen der diversen Vergleichs- und Ausführungsbeispiele, ist selbst ohne aus Aufwandsgründen unterbliebene 3-D-Erfassung der Ausführungsbeispiele 4 und 5 von einer guten Dimensionsgenauigkeit dieser Ausführungsbeispiele auszugehen.

Auch wenn das Vergleichsbeispiels 2 eine gute Dimensionsgenauigkeit erreicht, ist die Oberflächenqualität des Vergleichsbeispiels 2 ungenügend. So sind mit bloßem Auge auf der Oberfläche der Zahnkrone weiße Abscheidungen sowie Risse zu erkennen. Die Oberfläche der Ausführungsbeispiele 4 bis 6 ist hingegen als sehr gut zu bezeichnen. So zeigen sich weder Abscheidungen noch Risse. Auch andere Störungen der Oberfläche sind nicht erkennbar.

**Patentansprüche**

1. Verfahren zur Nachbehandlung von aus einer lichthärtenden Harzformulierung gedruckten 3-D-Objekten (10), wobei ein einem 3-D-Drucker entnommenes 3-D-Objekt (10) gemäß den folgenden Schritten nachbehandelt wird:

   a) Aussetzen der Oberfläche (11) des 3-D-Objektes (10) einer Nachbehandlungsflüssigkeit (16) umfassend eine lichthärtende Harzformulierung für eine vorgegebene Einwirkzeit, wobei die Nachbehandlungsflüssigkeit (16) und Einwirkzeit so gewählt sind, dass die Nachbehandlungsflüssigkeit (16) innerhalb der Einwirkzeit aufgrund Kapillarität in einen Riss (12) oder eine Pore (13) an der Oberfläche (11) des 3-D-Objektes (10) eindringen kann;
   b) Entfernen der oberflächlich auf dem 3-D-Objekt (10) verbliebenen Nachbehandlungsflüssigkeit (16); und
   c) Bestrahlen des 3-D-Objektes (10) mit Licht zum Nachhärten der zum Druck des 3-D-Objekts (10) verwendeten lichthärtenden Harzformulierung und Aushärten der in Risse (12) und/oder Poren (13) an der Oberfläche (10) des 3-D-Objekts (10) eingedrungenen Nachbehandlungsflüssigkeit (16),

   wobei die die Viskosität der Nachbehandlungsflüssigkeit (16) bei 23 °C in einem Scherratenbereich von 0,01-10 $s^{-1}$ maximal 2 Pa s beträgt.

2. Verfahren nach Anspruch 1,
   **dadurch gekennzeichnet, dass**
   die Oberfläche (11) des 3-D-Objektes (10) vor dem Aussetzen mit der Nachbehandlungsflüssigkeit (16) mit einem, sich von der Nachbehandlungsflüssigkeit (16) unterscheidenden Reinigungsmittel (15) zum Entfernen von oberflächlich am 3-D-Objekt anhaftender Reste (14) nicht oder nicht vollständig ausgehärteter Harzformulierung gereinigt wird, wobei das Reinigungsmittel (15) vorzugsweise vor Aussetzen des 3-D-Objektes (10) der Nachbehandlungsflüssigkeit (16) vollständig verflüchtigt ist oder entfernt wird.

3. Verfahren nach Anspruch 2,
   **dadurch gekennzeichnet, dass**
   das Reinigungsmittel (15) ein flüchtiges organisches Lösungsmittel, vorzugsweise umfassend Isopropanol und/oder Ethanol, ist.

4. Verfahren nach Anspruch 2 oder 3,
   **dadurch gekennzeichnet, dass**
   das Reinigungsmittel (15) bei 23 °C eine Verdunstungszahl von 1 bis 15 aufweist.

5. Verfahren nach Anspruch 1,
   **dadurch gekennzeichnet, dass**
   das Aussetzen der Oberfläche (11) des 3-D-Objektes (10) der Nachbehandlungsflüssigkeit (16) eine Reinigung der Oberfläche (11) umfasst, wozu die Nachbehandlungsflüssigkeit (16) eine geringere Viskosität als die Viskosität oberflächliche am 3-D-Objekt (10) anhaftender Reste (14) nicht oder nicht vollständig ausgehärteter, beim 3-D-Druck verwendeter Harzformulierung aufweist.

6. Verfahren nach einem der vorhergehenden Ansprüche,
   **dadurch gekennzeichnet, dass**
   das Aussetzen der Oberfläche (11) des 3-D-Objektes (10) mit der Nachbehandlungsflüssigkeit (16) das Bestreichen der Oberfläche (11) des 3-D-Objektes (10) mit Nachbehandlungsflüssigkeit (16) oder das Eintauchen in ein Nachbehandlungsflüssigkeitsbad umfasst, wobei im Falle einer Reinigung der Oberfläche (11) des 3-D-Objektes (10) mit Nachbehandlungsflüssigkeit (16) das Nachbehandlungsflüssigkeitsbad vorzugsweise als Ultraschallbad ausgestaltet ist oder ein Rührwerk zum Umspülen des 3-D-Objektes (10) mit Nachbehandlungsflüssigkeit (16) aufweist.

7. Verfahren nach einem der vorhergehenden Ansprüche,
   **dadurch gekennzeichnet, dass**
   das Entfernen der oberflächlich auf dem 3-D-Objekt (10) verbliebenen Nachbehandlungsflüssigkeit (16) und/oder das Entfernen von Reinigungsmittel (15) durch Abblasen der Nachbehandlungsflüssigkeit (16) und/oder der Reinigungsmittel (15) erfolgt.

8.  Verfahren nach einem der vorhergehenden Ansprüche,
    **dadurch gekennzeichnet, dass**
    die Nachbehandlungsflüssigkeit (16) bei 23 °C und einer Scherrate von 1 s$^{-1}$ eine Viskosität von 2 Pa s bis 0,005 Pa s, vorzugsweise von 1,5 Pa s bis 0,01 Pa s, weiter vorzugsweise von 1 Pa s bis 0,01 Pa s aufweist.

9.  Verfahren nach einem der vorhergehenden Ansprüche,
    **dadurch gekennzeichnet, dass**
    die Nachbehandlungsflüssigkeit (16) wenigstens ein radikalisch fotopolymerisierbares Monomer, vorzugsweise mehr als ein radikalisch fotopolymerisierbares Monomer umfasst.

10. Verfahren nach Anspruch 9,
    **dadurch gekennzeichnet, dass**
    das wenigstens eine radikalische photopolymerisierbare Monomer ausgewählt ist

    - aus der Gruppe der (Meth)acrylate, bevorzugt umfassend Monomere, bestehend aus mehreren, bevorzugt zwei (Meth)acrylatgruppen und einer Gruppe, die 2 bis 12 Kohlenstoffatome aufweist und ausgewählt ist aus linearen oder verzweigten Alkyl- und Alkylengruppen, aliphatischen cyclischen Kohlenwasserstoffgruppen, Polyoxyalkylengruppen und einer Kombination dieser Gruppen, bspw. PRDMA, 1,3Propandioldimethacrylat; BDMA, 1,3-Butandioldimethacrylat; BDDMA, 1,4-Butandioldimethacrylat; PDDMA, 1,5-Pentandioldimethacrylat; NPGDMA, Neopentylglykoldimethacrylat; HDDMA, 1,6-Hexandioldimethacrylat; NDDMA, 1,9-Nonandioldimethacrylat; DDDMA, 1,10-Decandioldimethacrylat; DDDDMA, 1,12-Dodecandioldimethacrylat; PRDA, 1,3-Propandioldiacrylat; BDA, 1,3-Butandioldiacrylat; BDDA, 1,4-Butandioldiacrylat; PDDA, 1,5-Pentandioldiacrylat; NPGDA, Neopentylglykoldiacrylat; HDDA, 1,6-Hexandioldiacrylat; NDDA, 1,9-Nonandioldiacrylat; DDDA, 1,10-Decandioldiacrylat; DDDDA, 1,12-Dodecandioldimethacrylat; EGDMA, Ethylenglykoldimethacrylat; DEGDMA, Diethylenglykoldimethacrylat; TEDMA, Triethylenglykoldimethacrylat; TEGDMA, Tetraethylenglykoldimethacrylat; EGDA, Ethylenglykoldiacrylat; DEGDA, Diethylenglykoldiacrylat; TEDA, Triethylenglykoldiacrylat; TEGDA, Tetraethylenglykoldiacrylat; PEG200DMA, Polyethylenglykol 200 Dimethacrylat; PEG300DMA, Polyethylenglykol 300 Dimethacrylat; PEG400DMA, Polyethylenglykol 400 Dimethacrylat; PEG600DMA, Polyethylenglykol 600 Dimethacrylat; PEG200DA, Polyethylenglykol 200 Diacrylat; PEG300DA, Polyethylenglykol 300 Diacrylat; PEG400DA, Polyethylenglykol 400 Diacrylat; PEG600DA, Polyethylenglykol 600 Diacrylat; PPGDMA, Polypropylenglykoldimethacrylat; PPGDA, Polypropylenglykoldiacrylat; NPG(PO)2DMA, Propoxyliertes (2) Neopentylglykoldimethacrylat; NPG(PO)2DA Propoxyliertes (2) Neopentylglykoldiacrylat;
    - aus der Gruppe der (Meth)acrylate, bevorzugt umfassend Monomere, bestehend aus einer (Meth)acrylatgruppe und einem Rest, der 2 bis 12 Kohlenstoffatome aufweist und ausgewählt ist aus linearen oder verzweigten Alkyl- und Alkylengruppen, aliphatischen cyclischen Kohlenwasserstoffgruppen, Polyoxyalkylengruppen und einer Kombination dieser Gruppen, bspw. EMA, Ethylmethacrylat; Allylmethacrylat; Allylacrylat; n-BMA, n-Butylmethacrylat; IBMA, Isobutylmethacrylat, t-BMA, tert-Butylmethacrylat; EHMA, 2-Ethylhexylmethacrylat; LMA, Laurylmethacrylat; TDMA, Tridecylmethacrylat; CHMA, Cyclohexylmethacrylat; BZMA, Benzylmethacrylat; IBOMA, Isobornylmethacrylate; HEMA, 2-Hydroxyethylmethacrylat; HPMA, 2-Hydroxypropylmethacrylat; DMMA, Dimethylaminoethylmethacrylat; DEMA, Diethylaminoethylmethacrylat; GMA, Glycidylmethacrylat; THFMA, Tetrahydrofurfurylmethacrylat; ETMA, Ethoxyethylmethacrylat; AIB, Isobutylacrylat; TBA, tert-Butylacrylat; LA, Laurylacrylat; CEA, Cetylacrylat; STA, Stearylacrylat; CHA, Cyclohexylacrylat; BZA, Benzylacrylat; IBOA, Isobornylacrylat; 2-MTA, 2-Methoxyethylacrylat; ETA, 2-Ethoxyethylacrylat; EETA, Ethoxyethoxyethylacrylat; PEA, 2Phenoxyethylacrylat; THFA, Tetrahydrofurfurylacrylat; HEA, 2-Hydroxyethylacrylat; HPA, 2-Hydroxypropylacrylat; 4HBA, 4-Hydroxybutylacrylat; DMA, Dimethylaminoethylacrylat; 3F, Trifluorethylacrylat; 17F, Heptadecafluorodecylacrylat; 2-PEA, 2-Phenoxyethylacrylat; TBCH, 4-tert-butylcyclohexylacrylat; DCPA, Dihydrodicyclopentadienylacrylat; EHA, 2-Ethylhexylacrylat; und 3EGMA, Triethylenglycolmonomethacrylat; und/oder
    - aus der Gruppe der (Meth)acrylate, umfassend Monomer(e), bestehend aus mehreren, bevorzugt zwei (Meth)acrylatgruppen und einer Gruppe, die mindestens eine Gruppe umfasst, ausgewählt aus einer Urethangruppe, einer Bisphenol A-Gruppe, einer aliphatischen polycyclischen Gruppe und einer Oligoestergruppe, bspw. Bis-MA, Bisphenol-A-dimethacrylat; Bis-GMA, Bisphenol-A-glyceroldimethacrylat; BPA(EO)DMA, Ethoxyliertes Bisphenol-A-Dimethacrylat(EO=1-30); BPA(PO)DMA, Propoxyliertes Bisphenol-A-Dimethacrylat(PO=1-30); BPA(EO)DA, Ethoxyliertes Bisphenol-A-Diacrylat(EO=1-30); BPA(PO)DA, Propoxyliertes Bisphenol-A-Diacrylat(PO=1-30); BPA(PO)GDA, Propoxyliertes BisphenolA-glyceroldiacrylat; UDMA, Diurethandimethacrylat; TCDD(M)A und PEM-665.

**11.** Verfahren nach einem der vorhergehenden Ansprüche,
**dadurch gekennzeichnet, dass**
die Nachbehandlungsflüssigkeit (16) wenigstens ein Additiv umfasst.

**12.** Verfahren nach Anspruch 11,
**dadurch gekennzeichnet, dass**
die Nachbehandlungsflüssigkeit (16) ein oder mehrere Additive, vorzugsweise ausgewählt aus der Gruppe (Photo) initiatoren, Stabilisatoren, Farbstoffen und nanoskaligen Füllstoffen, umfasst.

**13.** Verfahren nach einem der vorhergehenden Ansprüche,
**dadurch gekennzeichnet, dass**
das 3-D-Objekt (10) aus einer lichthärtenden Harzformulierung für den 3D-Druck umfassend 5 bis 65 Gew.-% unlösliche Füllstoffpartikel ist.

**14.** Verfahren nach einem der vorhergehenden Ansprüche,
**dadurch gekennzeichnet, dass**
die Nachbehandlungsflüssigkeit derart gewählt ist, dass sie bei Bestrahlen des 3-D-Objektes zum Nachhärten unmittelbar mitaushärtet.

**15.** Verfahren zum Druck von 3-D-Objekten, bei dem sich an den 3-D-Druck eines 3-D-Objektes aus einer lichthärtenden Harzformulierung ein Verfahren gemäß einem der vorhergehenden Ansprüche anschließt.


**Claims**

**1.** Method of aftertreatment of 3-D objects (10) printed from a light-curing resin formulation, wherein a 3-D object (10) taken from a 3-D printer is aftertreated by the following steps:

a) exposing the surface (11) of the 3-D object (10) to an aftertreatment fluid (16) comprising a light-curing resin formulation for a given contact time, where the aftertreatment fluid (16) and contact time are chosen such that the aftertreatment fluid (16) can penetrate into a fissure (12) or a pore (13) on the surface (11) of the 3-D object (10) within the contact time owing to capillarity;
b) removing the aftertreatment fluid (16) remaining on the surface of the 3-D object (10); and
c) irradiating the 3-D object (10) with light for post-curing of the light-curing resin formulation used to print the 3-D object (10) and curing the aftertreatment fluid (16) that has penetrated into fissures (12) and/or pores (13) at the surface (10) of the 3-D object (10), wherein the viscosity of the aftertreatment fluid (16) at 23°C in a shear rate range of 0.01-10 $s^{-1}$ is not more than 2 Pa s.

**2.** Method according to Claim 1,
**characterized in that**
the surface (11) of the 3-D object (10), before being exposed to the aftertreatment fluid (16), is cleaned with a detergent (15) distinct from the aftertreatment fluid (16) to remove residues (14) of uncured or incompletely cured resin formulation adhering to the surface of the 3-D object, wherein the detergent (15) has preferably completely evaporated or is removed prior to exposure of the 3-D object (10) to the aftertreatment fluid (16).

**3.** Method according to Claim 2,
**characterized in that**
the detergent (15) is a volatile organic solvent, preferably comprising isopropanol and/or ethanol.

**4.** Method according to Claim 2 or 3,
**characterized in that**
the detergent (15) at 23°C has a volatility index of 1 to 15.

**5.** Method according to Claim 1,
**characterized in that**
the exposing of the surface (11) of the 3-D object (10) to the aftertreatment fluid (16) includes cleaning of the surface (11), for which the aftertreatment fluid (16) has a lower viscosity than the viscosity of residues (14) of uncured or incompletely cured resin formulation used in the 3-D printing that adhere to the surface of the 3-D object (10).

**6.** Method according to any of the preceding claims,
**characterized in that**
the exposing of the surface (11) of 3-D object (10) to the aftertreatment fluid (16) comprises the coating of the surface (11) of the 3-D object (10) with aftertreatment fluid (16) or dipping it into an aftertreatment fluid bath, wherein, in the case of cleaning of the surface (11) of the 3-D object (10) with aftertreatment fluid (16), the aftertreatment fluid bath is preferably configured as an ultrasound bath or has a stirrer system for washing the 3-D object (10) with aftertreatment fluid (16).

**7.** Method according to any of the preceding claims,
**characterized in that**
the removing of the aftertreatment fluid (16) remaining on the surface of the 3-D object (10) and/or the removing of detergent (15) is effected by blowing away the aftertreatment fluid (16) and/or the detergent (15).

**8.** Method according to any of the preceding claims,
**characterized in that**
the aftertreatment fluid (16) at 23°C and a shear rate of $1\,s^{-1}$ has a viscosity of 2 Pa s to 0.005 Pa s, preferably of 1.5 Pa s to 0.01 Pa s, further preferably of 1 Pa s to 0.01 Pa s.

**9.** Method according to any of the preceding claims,
**characterized in that**
the aftertreatment fluid (16) comprises at least one free-radically photopolymerizable monomer, preferably more than one free-radically photopolymerizable monomer.

**10.** Method according to Claim 9,
**characterized in that**
the at least one free-radically photopolymerizable monomer is selected

- from the group of the (meth)acrylates, preferably comprising monomers consisting of two or more, preferably two, (meth)acrylate groups and one group which has 2 to 12 carbon atoms and is selected from linear or branched alkyl and alkylene groups, aliphatic cyclic hydrocarbyl groups, polyoxyalkylene groups and a combination of these groups, for example PRDMA, propane-1,3-diol dimethacrylate; BDMA, butane-1,3-diol dimethacrylate; BDDMA, butane-1,4-diol dimethacrylate; PDDMA, pentane-1,5-diol dimethacrylate; NPGDMA, neopentyl glycol dimethacrylate; HDDMA, hexane-1,6-diol dimethacrylate; NDDMA, nonane-1,9-diol dimethacrylate; DDDMA, decane-1,10-diol dimethacrylate; DDDDMA, dodecane-1,12-diol dimethacrylate; PRDA, propane-1,3-diol diacrylate; BDA, butane-1,3-diol diacrylate; BDDA, butane-1,4-diol diacrylate; PDDA, pentane-1,5-diol diacrylate; NPGDA, neopentyl glycol diacrylate; HDDA, hexane-1,6-diol diacrylate; NDDA, nonane-1,9-diol diacrylate; DDDA, decane-1,10-diol diacrylate; DDDDA, dodecane-1,12-diol dimethacrylate; EGDMA, ethylene glycol dimethacrylate; DEGDMA, diethylene glycol dimethacrylate; TEDMA, triethylene glycol dimethacrylate; TEGDMA, tetraethylene glycol dimethacrylate; EGDA, ethylene glycol diacrylate; DEGDA, diethylene glycol diacrylate; TEDA, triethylene glycol diacrylate; TEGDA, tetraethylene glycol diacrylate; PEG200DMA, polyethylene glycol 200 dimethacrylate; PEG300DMA, polyethylene glycol 300 dimethacrylate; PEG400DMA, polyethylene glycol 400 dimethacrylate; PEG600DMA, polyethylene glycol 600 dimethacrylate; PEG200DA, polyethylene glycol 200 diacrylate; PEG300DA, polyethylene glycol 300 diacrylate; PEG400DA, polyethylene glycol 400 diacrylate; PEG600DA, polyethylene glycol 600 diacrylate; PPGDMA, polypropylene glycol dimethacrylate; PPGDA, polypropylene glycol diacrylate; NPG(PO)2DMA, propoxylated (2) neopentyl glycol dimethacrylate; NPG(PO)2DA, propoxylated (2) neopentyl glycol diacrylate;
- from the group of the (meth)acrylates, preferably comprising monomers consisting of a (meth)acrylate group and a radical which has 2 to 12 carbon atoms and is selected from linear or branched alkyl and alkylene groups, aliphatic cyclic hydrocarbyl groups, polyoxyalkylene groups and a combination of these groups, for example EMA, ethyl methacrylate; allyl methacrylate; allyl acrylate; n-BMA, n-butyl methacrylate; IBMA, isobutyl methacrylate, t-BMA, tert-butyl methacrylate; EHMA, 2-ethylhexyl methacrylate; LMA, lauryl methacrylate; TDMA, tridecyl methacrylate; CHMA, cyclohexyl methacrylate; BZMA, benzyl methacrylate; IBOMA, isobornyl methacrylate; HEMA, 2-hydroxyethyl methacrylate; HPMA, 2-hydroxypropyl methacrylate; DMMA, dimethylaminoethyl methacrylate; DEMA, diethylaminoethyl methacrylate; GMA, glycidyl methacrylate; THFMA, tetrahydrofurfuryl methacrylate; ETMA, ethoxyethyl methacrylate; AIB, isobutyl acrylate; TBA, tert-butyl acrylate; LA, lauryl acrylate; CEA, cetyl acrylate; STA, stearyl acrylate; CHA, cyclohexyl acrylate; BZA, benzyl acrylate; IBOA, isobornyl acrylate; 2-MTA, 2-methoxyethyl acrylate; ETA, 2-ethoxyethyl acrylate; EETA, ethoxyethoxyethyl acrylate; PEA, 2-phenoxyethyl acrylate; THFA, tetrahydrofurfuryl acrylate; HEA, 2-hydroxyethyl acrylate;

HPA, 2-hydroxypropyl acrylate; 4HBA, 4-hydroxybutyl acrylate; DMA, dimethylaminoethyl acrylate; 3F, trifluoroethyl acrylate; 17F, heptadecafluorodecyl acrylate; 2-PEA, 2-phenoxyethyl acrylate; TBCH, 4-tert-butylcyclohexyl acrylate; DCPA, dihydrodicyclopentadienyl acrylate; EHA, 2-ethylhexyl acrylate; and 3EGMA, triethylene glycol monomethacrylate; and/or

- from the group of the (meth)acrylates comprising monomer(s) consisting of two or more, preferably two, (meth) acrylate groups and one group comprising at least one group selected from a urethane group, a bisphenol A group, an aliphatic polycyclic group and an oligoester group, for example bis-MA, bisphenol A dimethacrylate; bis-GMA, bisphenol A glycerol dimethacrylate; BPA(EO)DMA, ethoxylated bisphenol A dimethacrylate (EO=1-30); BPA(PO)DMA, propoxylated bisphenol A dimethacrylate (PO=1-30); BPA(EO)DA, ethoxylated bisphenol A diacrylate (EO=1-30); BPA(PO)DA, propoxylated bisphenol A diacrylate (PO=1-30); BPA(PO)GDA, propoxylated bisphenol A-glycerol diacrylate; UDMA, diurethane dimethacrylate; TCDD(M)A and PEM-665.

11. Method according to any of the preceding claims,
**characterized in that**
the aftertreatment fluid (16) comprises at least one additive.

12. Method according to Claim 11,
**characterized in that**
the aftertreatment fluid (16) comprises one or more additives, preferably selected from the group of (photo)initiators, stabilizers, dyes and nanoscale fillers.

13. Method according to any of the preceding claims,
**characterized in that**
the 3-D object (10) is composed of a light-curing resin formulation for 3-D printing comprising 5% to 65% by weight of insoluble filler particles.

14. Method according to any of the preceding claims,
**characterized in that**
the aftertreatment fluid is chosen such that it is subject to immediate concomitant curing on irradiation of the 3-D object for post-curing.

15. Method of printing 3-D objects, in which the 3-D printing of a 3-D object from a light-curing resin formulation is followed by a method according to any of the preceding claims.

**Revendications**

1. Procédé de post-traitement d'objets 3D (10) imprimés à partir d'une formulation de résine durcissant à la lumière, un objet 3D (10) prélevé d'une imprimante 3D étant post-traité selon les étapes suivantes :

a) soumission de la surface (11) de l'objet 3D (10) à un liquide de post-traitement (16) comprenant une formulation de résine durcissant à la lumière pendant un temps d'action spécifié, le liquide de post-traitement (16) et le temps d'action étant choisis de telle sorte que le liquide de post-traitement (16) peut pénétrer pendant le temps d'action, en raison de la capillarité, dans une fissure (12) ou un pore (13) à la surface (11) de l'objet 3D (10) ;
b) élimination du liquide de post-traitement (16) resté à la surface de l'objet 3D (10) ; et
c) exposition de l'objet 3D (10) à un rayonnement de lumière pour le postdurcissement de la formulation de résine durcissant à la lumière utilisée pour l'impression de l'objet 3D (10) et durcissement du liquide de post-traitement (16) pénétré dans les fissures (12) et/ou les pores (13) à la surface (10) de l'objet 3D (10),

la viscosité du liquide de post-traitement (16) à 23°C dans une plage de cisaillement de 0,01-10 s$^{-1}$ étant d'au maximum 2 Pa.s.

2. Procédé selon la revendication 1,
**caractérisé en ce que**
la surface (11) de l'objet 3D (10) est nettoyée, avant la soumission au liquide de post-traitement (16), par un agent de nettoyage (15) se distinguant du liquide de post-traitement (16) afin d'éliminer des restes (14), adhérant à la surface de l'objet 3D, de formulation de résine non durcie ou non complètement durcie, l'agent de nettoyage (15) étant de préférence totalement volatilisé ou éliminé avant la soumission de l'objet 3D (10) au liquide de post-traitement (16).

**3.** Procédé selon la revendication 2,
**caractérisé en ce que**
l'agent de nettoyage (15) est un solvant organique volatil, comprenant de préférence l'isopropanol et/ou d'éthanol.

**4.** Procédé selon la revendication 2 ou 3,
**caractérisé en ce que**
l'agent de nettoyage (15) présente, à 23°C, un indice d'évaporation de 1 à 15.

**5.** Procédé selon la revendication 1,
**caractérisé en ce que**
la soumission de la surface (11) de l'objet 3D (10) au liquide de post-traitement (16) comprend un nettoyage de la surface (11), le liquide de post-traitement (16) présentant à cette fin une viscosité inférieure à la viscosité des restes (14), adhérant à la surface de l'objet 3D (10), de formulation de résine non durcie ou non complètement durcie, utilisée lors de l'impression 3D.

**6.** Procédé selon l'une des revendications précédentes,
**caractérisé en ce que**
la soumission de la surface (11) de l'objet 3D (10) au liquide de post-traitement (16) comprend l'enduction de la surface (11) de l'objet 3D (10) par du liquide de post-traitement (16) ou l'immersion dans un bain de liquide de post-traitement, où, dans le cas d'un nettoyage de la surface (11) de l'objet 3D (10) par du liquide de post-traitement (16), le bain de liquide de post-traitement est de préférence conçu comme bain à ultrasons ou présente un agitateur destiné à faire baigner l'objet 3D (10) dans le liquide de post-traitement (16).

**7.** Procédé selon l'une des revendications précédentes,
**caractérisé en ce que**
l'élimination du liquide de post-traitement (16) qui reste à la surface de l'objet 3D (10) et/ou l'élimination de l'agent de nettoyage (15) est/sont effectuée(s) par élimination par soufflage du liquide de post-traitement (16) et/ou de l'agent de nettoyage (15).

**8.** Procédé selon l'une des revendications précédentes,
**caractérisé en ce que**
le liquide de post-traitement (16) présente, à 23°C et à une vitesse de cisaillement de 1 $s^{-1}$, une viscosité de 2 Pa.s à 0,005 Pa.s, de préférence de 1,5 Pa.s à 0,01 Pa.s, plus préférablement de 1 Pa.s à 0,01 Pa.s.

**9.** Procédé selon l'une des revendications précédentes,
**caractérisé en ce que**
le liquide de post-traitement (16) comprend au moins un monomère photopolymérisable par voie radicalaire, de préférence plus d'un monomère photopolymérisable par voie radicalaire.

**10.** Procédé selon la revendication 9,
**caractérisé en ce que**
ledit au moins un monomère photopolymérisable par voie radicalaire est choisi

- dans le groupe des (méth)acrylates, comprenant de préférence des monomères constitués par plusieurs, de préférence deux, groupes (méth)acrylate et un groupe qui présente 2 à 12 atomes de carbone et qui est choisi parmi les groupes alkyle et alkylène, linéaires ou ramifiés, les groupes hydrocarbonés aliphatiques cycliques, les groupes polyoxyalkylène et une combinaison de ces groupes, par exemple PRDMA, diméthacrylate de 1,3-propanediol ; BDMA, diméthacrylate de 1,3-butanediol ; BDDMA, diméthacrylate de 1,4-butanediol ; PDDMA, diméthacrylate de 1,5-pentanediol ; NPGDMA, diméthacrylate de néopentylglycol ; HDDMA, diméthacrylate de 1,6-hexanediol ; NDDMA, diméthacrylate de 1,9-nonanediol ; DDDMA, diméthacrylate de 1,10-décanediol ; DDDDMA, diméthacrylate de 1,12-dodécanediol ; PRDA, diacrylate de 1,3-propanediol ; BDA, diacrylate de 1,3-butanediol ; BDDA, diacrylate de 1,4-butanediol ; PDDA, diacrylate de 1,5-pentanediol ; NPGDA, diacrylate de néopentylglycol ; HDDA, diacrylate de 1,6-hexanediol ; NDDA, diacrylate de 1,9-nonanediol ; DDDA, diacrylate de 1,10-décanediol ; DDDDA, diméthacrylate de 1,12-dodécanediol ; EGDMA, diméthacrylate d'éthylèneglycol ; DEGDMA, diméthacrylate de diéthylèneglycol ; TEDMA, diméthacrylate de triéthylèneglycol ; TEGDMA, diméthacrylate de tétraéthylèneglycol ; EGDA, diacrylate d'éthylèneglycol ; DEGDA, diacrylate de diéthylèneglycol ; TEDA, diacrylate de triéthylèneglycol ; TEGDA, diacrylate de tétraéthylèneglycol ; PEG200DMA, diméthacrylate de polyéthylèneglycol 200 ; PEG300DMA, diméthacrylate de polyéthylèneglycol 300 ; PEG400DMA, diméthacrylate de polyéthylèneglycol 400 ; PEG600DMA, diméthacrylate de polyéthylèneglycol 600 ; PEG200DA, diacrylate de polyéthylèneglycol 200 ; PEG300DA, diacrylate de polyéthylèneglycol 300 ; PEG400DA, diacrylate de polyéthylèneglycol 400 ; PEG600DA, diacrylate de polyéthylèneglycol 600 ; PPGDMA, diacrylate de polypropylèneglycol ; PPGDA, diacrylate de polypropylèneglycol; NPG(PO)2DMA, diméthacrylate propoxylé (2) de néopentylglycol ; NPG(PO)2DA diacrylate propoxylé (2) de néopentylglycol ;

- dans le groupe des (méth)acrylates, comprenant de préférence des monomères constitués par un groupe (méth)acrylate et un radical qui présente 2 à 12 atomes de carbone et qui est choisi parmi les groupes alkyle et alkylène linéaires ou ramifiés, les groupes hydrocarbonés aliphatiques cycliques, les groupes polyoxyalkylène et une combinaison de ces groupes, par exemple EMA, méthacrylate d'éthyle ; méthacrylate d'allyle ; acrylate d'allyle ; n-BMA, méthacrylate de n-butyle ; IBMA, méthacrylate d'isobutyle, t-BMA, méthacrylate de tert-butyle ; EHMA, méthacrylate 2-éthylhexyle ; LMA, méthacrylate de lauryle ; TDMA, méthacrylate de tridécyle ; CHMA, méthacrylate de cyclohexyle ; BZMA, méthacrylate de benzyle ; IBOMA, méthacrylate d'isobornyle ; HEMA, méthacrylate 2-hydroxyéthyle ; HPMA, méthacrylate de 2-hydroxypropyle ; DMMA, méthacrylate de diméthylaminoéthyle ; DEMA, méthacrylate diéthylaminoéthyle ; GMA, méthacrylate de glycidyle ; THFMA, méthacrylate de tétrahydrofurfuryle ; ETMA, méthacrylate d'éthoxyéthyle ; AIB, acrylate d'isobutyle ; TBA, acrylate de tert-butyle ; LA, acrylate de lauryle ; CEA, acrylate de cétyle ; STA, acrylate de stéaryle ; CHA, acrylate de cyclohexyle ; BZA, acrylate de benzyle ; IBOA, acrylate d'isobornyle ; 2-MTA, acrylate de 2-méthoxyéthyle ; ETA, acrylate de 2-éthoxyéthyle ; EETA, acrylate d'éthoxyéthoxyéthyle ; PEA, acrylate de 2-phénoxyéthyle ; THFA, acrylate de tétrahydrofurfuryle ; HEA, acrylate de 2-hydroxyéthyle ; HPA, acrylate de 2-hydroxypropyle ; 4HBA, acrylate de 4-hydroxybutyle ; DMA, acrylate de diméthylaminoéthyle ; 3F, acrylate de trifluoroéthyle ; 17F, acrylate d'heptadécafluorodécyle ; 2-PEA, acrylate de 2-phénoxyéthyle ; TBCH, acrylate de 4-tert-butylcyclohexyle ; DCPA, acrylate de dihydrodicyclopentadiényle ; EHA, acrylate de 2-éthylhexyle ; et 3EGMA, monométhacrylate de triéthylèneglycol ; et/ou

- dans le groupe des (méth)acrylates comprenant un/des monomère(s), constitué(s) par plusieurs, de préférence deux, groupes (méth)acrylate et un groupe qui comprend au moins un groupe choisi parmi une groupe uréthane, un groupe bisphénol A, un groupe aliphatique polycyclique et un groupe oligoester, par exemple bis-MA, diméthacrylate de bisphénol-A ; Bis-GMA, diméthacrylate de bisphénol-A-glycérol ; BPA(EO)DMA, diméthacrylate de bisphénol-A éthoxylé (EO=1-30); BPA(PO)DMA, diméthacrylate de bisphénol-A propoxylé (PO=1-30); BPA(EO)DA, diacrylate de bisphénol-A éthoxylé (EO=1-30) ; BPA(PO)DA, diacrylate de bisphénol-A propoxylé (PO=1-30); BPA(PO)GDA, diacrylate de bisphénol-A-glycérol propoxylé ; UDMA, diméthacrylate de diuréthane ; TCDD(M)A et PEM-665.

**11.** Procédé selon l'une des revendications précédentes,
**caractérisé en ce que**
le liquide de post-traitement (16) comprend au moins un additif.

**12.** Procédé selon la revendication 11,
**caractérisé en ce que**
le liquide de post-traitement (16) comprend un ou plusieurs additifs, de préférence choisis dans le groupe des (photo)initiateurs, des stabilisants, des colorants et des charges nanométriques.

**13.** Procédé selon l'une des revendications précédentes,
**caractérisé en ce que**
l'objet 3D (10) est constitué par une formulation de résine durcissant à la lumière pour l'impression 3D comprenant 5 à 65% en poids de particules de charge insolubles.

**14.** Procédé selon l'une des revendications précédentes,
**caractérisé en ce que**
le liquide de post-traitement est choisi de telle sorte qu'il durcit conjointement et directement lors de l'exposition de l'objet 3D à un rayonnement pour le postdurcissement.

**15.** Procédé d'impression d'objets 3D dans lequel un procédé selon l'une des revendications précédentes est réalisé après l'impression 3D d'un objet 3D constitué par une formulation de résine durcissant à la lumière.

Fig. 1 a

Fig. 1 b

Fig. 1 c

Fig. 1 d

Fig. 1 e

Fig. 1 f

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2020165430 A1
- US 2018319110 A1
- US 20170028432 A1
- WO 2020177921 A1